# EUROPÄISCHE PATENTSCHRIFT

(11) **EP 1 926 299 B1**
(45) Veröffentlichungstag und Bekanntmachung des Hinweises auf die Patenterteilung: **17.09.2014**
(21) Anmeldenummer: 07121603.0
(22) Anmeldetag: 27.11.2007
(51) Int. Cl.: H04M 15/00, H04M 15/10, H04M 17/00

(54) **Verfahren zur elektronischen Optimierung eines Kostensatzes in einem Kommunikationsnetzwerk**
Method for electronically optimising the cost set of a communications network
Procédé d'optimisation électronique d'un ensemble de frais dans un réseau de communication

(30) Priorität: 27.11.2006 DE 102006056198
(43) Veröffentlichungstag der Anmeldung: 28.05.2008
(73) Patentinhaber: Vodafone Holding GmbH, 40213 Düsseldorf (DE)
(72) Erfinder: Backes, Klaus, 41747, Viersen (DE)
(74) Vertreter: Vogel, Andreas

(56) Entgegenhaltungen:
- EP-A- 1 545 061
- WO-A-01/60045
- WO-A-03/005693
- DE-A1- 19 847 163
- DE-A1- 19 962 713

## Beschreibung

Die Erfindung betrifft ein Verfahren zur elektronischen Optimierung eines Kostensatzes in einem Kommunikationsnetzwerk, insbesondere in einem Mobilfunknetzwerk.

Aus der Offenlegungsschrift DE 199 47 069 A1 ist ein Verfahren zum Laden eines Kartenkontos einer Wertekarte für ein Mobilfunkgerät bekannt. Dabei werden von einem Benutzer des Mobilfunkgerätes Ladedaten übermittelt, die einen Wertbetrag und eine Zahlungsinformation beinhalten. Diese Ladedaten werden mittels eines Datendienstes an den Betreiber des Kommunikationsnetzwerkes übersandt. Nach einer Überprüfung wird dem Kartenkonto des Benutzers der Wertbetrag zugeordnet. Anschließend ist es dem Benutzer möglich, solange innerhalb des Kommunikationsnetzwerkes zu kommunizieren, bis die dafür anfallenden Gebühren dem vorher gebuchten Wertbetrag entsprechen.

Die Gebühr für eine Kommunikation in einem so ausgestalteten Kommunikationsnetzwerk ist somit eine entscheidende Größe. Einerseits sollte die Gebühr angemessen hoch sein, um die Investitionen und laufenden Kosten des Betreibers des Kommunikationsnetzwerkes auszugleichen. Andererseits sollte die Gebühr möglichst gering sein, um dem Betreiber eine gute Stellung im Wettbewerb zu verschaffen und die Konsumenten an den Betreiber zu binden.

Um den individuell verschiedenen Kommunikationsverhalten der Konsumenten Rechnung zu tragen, bieten die Betreiber der Kommunikationsnetzwerke unterschiedliche Verträge an. Diese Verträge variieren in der vorteilhaften Ausrichtung auf eine der mannigfachen Arten der Kommunikationen, die es in Kommunikationsnetzwerken gibt, wie etwa Telekommunikation, SMS und/oder MMS. Verwendet der Konsument vorrangig eine Art der Kommunikation, so erzielt er bei einem entsprechend gewählten Vertrag eine besonders günstige Gebühr.

In der DE 199 62 713 A1 wird ein Verfahren beschrieben, welches sich mit einer simulativen Berechnung eines Abrechnungspreises beschäftigt. Dabei erfolgt diese Berechnung auf einem von einer Telekommunikationsanlage getrennten Rechner. In der WO 99/65183 wird ein Kommunikationsnetzwerk beschrieben, bei welchem eine Übertragung von einer Tarifinformation auf ein mobiles Terminal und deren Verwendung auf dem mobilen Terminal verfolgt. Darauffolgend wird die Abrechnung ebenfalls über das mobile Terminal durchgeführt.

Als nachteilig hat es sich erwiesen, dass die meisten Konsumenten im Vorhinein nicht genau wissen, welche Art der Kommunikation sie in der näheren Zukunft hauptsächlich durchführen werden. Häufig stellt es sich im Nachhinein heraus, dass der falsche Vertrag gewählt wurde, welcher auf eine unzutreffende Art der Kommunikation optimiert ist. Da bei der Kündigung bzw. Änderung des Vertrages häufig weitere Kosten anfallen, kann so die Kundenzufriedenheit und somit die Bindung des Kunden an den Kommunikationsnetzwerkbetreiber sinken.

Die Aufgabe der Erfindung ist es, ein Verfahren zur elektronischen Optimierung eines Kostensatzes in einem Kommunikationsnetzwerk zu schaffen, welches die vorgenannten Nachteile vermeidet.

Erfindungsgemäß wird die Aufgabe gelöst durch ein Verfahren zur elektronischen Optimierung eines Kostensatzes in einem Kommunikationsnetzwerk mit den Merkmalen des Anspruchs 1, wobei insbesondere über eine Kommunikationseinrichtung eines Handcomputers eine Kommunikation mit dem Kommunikationsnetzwerk aufgebaut wird, mit dem Kommunikationsnetzwerk mindestens zwei Arten der Kommunikation ausführbar sind, durch eine Rechnereinheit die Kommunikation mit dem Kommunikationsnetzwerk elektronisch überwacht wird, die Rechnereinheit mittels eines beim Aufbau der Kommunikation übersandten Informationssatzes die Art der Kommunikation ermittelt, die Rechnereinheit elektronisch einen Umfang und die Art jeder innerhalb eines Zeitrahmens geführten Kommunikation in einer Datenbank hinterlegt, in der Datenbank mindestens zwei Kostengruppen gespeichert sind, jede Kostengruppe individuelle Kostenfaktoren für jede Art der Kommunikation aufweist, nach Ablauf des Zeitrahmens von der Rechnereinheit für jede Kostengruppe ein Kostensatz ermittelt wird, die Kostensätze aus dem Umfang, der Art der Kommunikation und den Kostenfaktoren berechnet werden, und die Rechnereinheit anschließend elektronisch den günstigeren Kostensatz auswählt und der Handcomputer dem Kommunikationsnetzwerk mitteilt, welcher Kostensatz dem Handcomputer zugeordnet werden soll

Als Handcomputer wird hierbei ein System bezeichnet, das Signale, insbesondere Daten oder Informationen, verarbeiten und in wenigstens eine Richtung übermitteln kann. Es kann sich dabei insbesondere um ein Mobiltelefon, also ein tragbares, batteriebetriebenes Funktelefon handeln oder auch um eine Datenkarte, die in einen Computer integriert werden kann. Entsprechende Datenkarten sind insbesondere als PCMCIA Steckkarten bekannt. Kommunikation ist im Sinne der Erfindung insbesondere eine Daten- oder Informationsübertragung. Diese kann auf eine Richtung beschränkt sein oder zwischen zwei Komponenten bidirektional erfolgen.

Der Kern des erfindungsgemäßen Verfahrens liegt darin, dass eine Rechnereinheit autonom, automatisch und in etwa zeitgleichen Abständen den anfallenden Kostensatz auf Basis mindestens zweier unterschiedlicher Ausgestaltungen eines Vertrages berechnet. Somit werden Änderungen im Kommunikationsverhalten oder ein fehlerhaft ausgewählter Vertrag durch das erfindungsgemäße Verfahren erkannt. Durch die automatische Anpassung der abgerechneten Kosten an den jeweils günstigeren Vertrag erhöht sich die Zufriedenheit der Kunden und somit deren Bindung an den Kommunikationsnetzwerkbetreiber.

Ein Kommunikationsnetzwerk weist heutzutage häufig eine Vielzahl unterschiedlicher Typen von Kommunikationsnetzen auf. So kann beispielsweise ein Kommunikationsnetz für drahtgebundene Telekommunikation und ein Kommunikationsnetz für Mobilfunkkommunikation parallel in einem Kommunikationsnetzwerk betrieben werden. Häufig findet zusätzlich eine weitere Unterteilung der Kommunikationsnetze bezüglich der technischen Ausgestaltung statt. So werden heutzutage häufig von einem Kommunikationsnetzwerkbetreiber parallel Mobilfunknetze sowohl im GSM als auch im UMTS-Standard betrieben. Mit dem Begriff Art der Kommunikation im Sinne der Erfindung soll dabei jede erdenkliche Kommunikationsmöglichkeit in den verschiedenen technischen Ausgestaltungen der unterschiedlichen Kommunikationsnetze umfasst sein. Neben der bekannten Telekommunikation sind dieses insbesondere Dienste wie SMS (Short Message Service), MMS (Multimedia Messaging Service), EMS (Enhanced Message Service) und/oder LBS (Location Based Services), die in modernen Kommunikationsnetzwerken angeboten werden. Gleichfalls umfasst sind unterschiedliche technische Ausgestaltungen der Kommunikationsnetze wie etwa Verbindungen mittels POTS, ISDN, DSL im Bereich der Festnetze und GPRS, EDGE und/oder HSxPA (High Speed x Packet Acces) für Mobilfunknetze.

Ein Teil eines Vertrages mit einem Kommunikationsnetzwerkbetreiber ist eine Kostengruppe für die Kommunikationsdienstleistung. Jede Kostengruppe ist dabei aufgespalten in eine Anzahl von Kostenfaktoren. Dabei umfasst ein Kostenfaktor das anfallende Entgelt für die Benutzung einer Art der Kommunikation. Folglich ist jede Kostengruppe ein Paket von individuellen Kostenfaktoren, die einem Kunden angeboten werden. Dabei weist im Allgemeinen jede Kostengruppe einen besonders geringen Kostenfaktor für eine präferierte Art der Kommunikation auf. Ist dem Konsumenten im Vorhinein bekannt auf welche Art er hauptsächlich kommuniziert, kann der Konsument einen entsprechend gestalteten Vertrag wählen. Wie schon oben dargelegt, wissen aber im Allgemeinen die Konsumenten nicht im Vorhinein, welche Art der Kommunikation von Ihnen hauptsächlich ausgeführt wird. Zusätzlich ändert sich häufig das Kommunikationsverhalten nach Abschluss des Vertrages. Aus diesem Grunde bestimmt das erfindungsgemäße Verfahren den für die Kommunikation anfallenden Kostensatz für mindestens zwei Kostengruppen und wählt den jeweils niedrigeren Kostensatz aus und ordnet diesen dem Handcomputer zu.

In einer vorteilhaften Ausgestaltung des erfindungsgemäßen Verfahrens bestimmt die Rechnereinheit einen Standort des Handcomputers innerhalb des Kommunikationsnetzwerkes. Dieses bietet sich insbesondere bei Mobilfunknetzen an, welche eine zellenartige Struktur aufweisen, was eine Bestimmung des Standortes des Handcomputers erleichtert. Die Information über den Standort des Handcomputers kann die Art der Kommunikation beeinflussen. Beispielsweise kann der Vertrag des Kommunikationsnetzwerkbetreibers einen besonders günstigen Kostenfaktor anbieten, falls der Handcomputer vorrangig am Wohnort genutzt wird. Detektiert die Rechnereinheit diesen Standort, so kann automatisch die Art der Kommunikation geändert werden, was vorteilhafterweise auf einem Ausgabemittel des Handcomputers angezeigt wird, um den Benutzer zu informieren. Dieses ermöglicht es insbesondere dem Benutzer eine leicht zugängige Kontrolle über seine Kommunikationsart und die dabei anfallenden Kostenfaktoren zu behalten.

Das erfindungsgemäße Verfahren ermöglicht es sowohl kurzfristige als auch langfristige Änderungen im Kommunikationsverhalten des Konsumenten zu ermitteln und den jeweils günstigeren Kostensatz zu bestimmen. Um beiden Ansprüchen gerecht zu werden hat es sich als vorteilhaft erwiesen, wenn der Zeitrahmen eine Zeitspanne von mehreren Sekunden, Minuten, Stunden, Tagen, Wochen, Monaten und/oder Jahren umfasst. Insbesondere können mehrere unterschiedliche Zeitrahmen parallel angewendet werden, um eine tägliche, wöchentliche und/oder monatliche Optimierung des Kostensatzes zu erzielen. In diesem Zusammenhang hat es sich als vorteilhaft erwiesen, wenn die Rechnereinheit den jeweils günstigeren Kostensatz mehrerer - insbesondere aufeinander folgender - Zeitrahmen in einer Datenbank speichert. Zusätzlich kann in der Datenbank auch die Art und der Umfang der jeweils genutzten Kommunikation hinterlegt werden. Mit Hilfe dieser Informationen kann die Rechnereinheit sowohl kurzfristige als auch langfristige Schwankungen des Kommunikationsverhaltens ermitteln. Insbesondere ist es möglich, einen Mittelwert und eine Standartabweichung der gespeicherten Werte zu bestimmen. Dabei umfasst der Begriff Mittelwert die Bestimmung eines arithmetischen Mittels, eines gewichteten arithmetischen Mittels, eines Modus, eines Median und/oder eines gleitenden Durchschnittes. In einer weiteren vorteilhaften Ausgestaltung kann die Rechnereinheit im Anschluss an eine Auswertung der gespeicherten Kostensätze die Kostenfaktoren ändern. Dieses bietet sich insbesondere dann an, wenn ein Vergleich mit den Mittelwerten und/oder den Standartabweichungen anderer Handcomputer eine Änderung des netzwerkweiten Kommunikationsverhaltens aufzeigt. Dadurch ist es dem Kommunikationsnetzwerkbetreiber möglich, auf Schwankungen wie sie durch Modeerscheinungen auftreten, kurzfristig zu reagieren und dem Kunden besonders günstige Kostenfaktoren für die nunmehr bevorzugte Kommunikationsart anzubieten.

Eine weitere vorteilhafte Variante des Verfahrens zeichnet sich dadurch aus, dass bei der Kommunikation von dem Handcomputer ein Authentifizierungssatz übermittelt wird, wobei von der Rechnereinheit die Kostenfaktoren in Abhängigkeit vom Authentifizierungssatz verändert werden. Als Authentifizierung wird erfindungsgemäß der Vorgang der Überprüfung der Identität eines Gegenübers, wie zum Beispiel einer Person oder eines Handcomputers, bezeichnet. Die Authentifizierung hat den Zweck Systemfunktionen vor Missbrauch zu schützen. Dazu stellt die Authentifizierung sicher, dass der Kommunikationspartner auch derjenige ist, für den sich dieser ausgibt. Das Kernstück der meisten Authentifizierungsverfahren ist der Nachweis der Benutzeridentität und damit auch der Benutzerberechtigung gegenüber dem System. Dazu dienen vorrangig Passwörter, persönliche ID-Nummern sowie kryptografische Techniken.

Nicht zur Erfindung gehört ein Verfahrens, welches sich dadurch auszeichnet, dass
(1) von dem Handcomputer über die Kommunikation bei der Rechnereinheit ein Kommunikationsguthaben mit einem definierten Ausmaß gebucht wird,
(2) das Ausmaß des Kommunikationsguthabens von der Rechnereinheit in der Datenbank gespeichert wird, und
(3) nach Ablauf des Zeitrahmens die Rechnereinheit den günstigeren Kostensatz von dem Ausmaß des Kommunikationsguthabens subtrahiert.

Das Kommunikationsguthaben kann in Form einer vorausgezahlten, aufladbaren Wertkarte (auch Prepaid-Card) erworben werden. Anschließend wird durch Eingabe einer Identifizierungsnummer des Kommunikationsguthabens dieses mittels des Handcomputers an das Kommunikationsnetzwerk bzw. die Rechnereinheit übertragen. Im Anschluss daran kann der Handcomputer im Umfang des gebuchten Kommunikationsguthabens für die Kommunikation in dem Kommunikationsnetzwerk genutzt werden. Um dieses zu ermöglichen hinterlegt die Rechnereinheit das Ausmaß des Kommunikationsguthabens in der Datenbank und zieht den jeweils niedrigeren Kostensatz davon ab. Nach Verbrauch des Kommunikationsguthabens kann der Konsument das Kommunikationsguthaben mittels einer weiteren Wertkarte wieder aufladen. Die Attraktivität der Verwendung eines Kommunikationsguthabens liegt darin, dass sich der Konsument nicht durch einen Vertrag über eine längere Zeit verpflichten muss und im Allgemeinen auch keine monatlichen Grundgebühren zahlen brauch. Wie bei der oben beschriebenen vertraglichen Bindungen des Konsumenten an den Kommunikationsnetzwerkbetreiber gibt es unterschiedlich ausgestaltete Verträge für die Kommunikation mittels Kommunikationsguthabens. Somit bietet sich auch in diesen Fällen das erfindungsgemäße Verfahren an, um einen möglichst günstigen Kostensatz für die Kommunikation zu berechnen.

Nach dem erfindungsgemäßen Verfahrens sind die Rechnereinheit und die Datenbank in dem Handcomputer integriert. Dabei bietet es sich insbesondere an, die Kostengruppen und/oder einen oder mehrere Kostenfaktoren bei der Kommunikation mit dem Kommunikationsnetzwerk zu aktualisieren. Dabei ist somit die Rechnereinheit nicht zentral im Kommunikationsnetzwerk aufgebaut, sondern dezentral in den Handcomputern integriert. Dieses ermöglicht eine permanente Berechnung des jeweils günstigsten Kostensatzes im Handcomputer. Im Anschluss teilt der Handcomputer dem Kommunikationsnetzwerk mit, welcher Kostensatz dem Handcomputer zugeordnet werden soll. Als Resultat könnte die im Kommunikationsnetzwerk integrierte Infrastruktur reduziert werden. Damit die im Handcomputer hinterlegten Kostengruppen an äußere Gegebenheiten angepasst werden können, ermöglicht eine weitere vorteilhafte Ausgestaltung des erfindungsgemäßen Verfahrens, die Aktualisierung der Kostengruppen und/oder Kostenfaktoren bei der Kommunikation mit dem Kommunikationsnetzwerk. Diese Aktualisierung könnte im Rahmen einer beliebigen Kommunikation mit dem Kommunikationsnetzwerk geschehen. Der Handcomputer könnte dazu automatisch, autonom und in etwa zeitgleichen Abständen eine Anfrage an das Kommunikationsnetzwerk starten, ob sich die Kostengruppen bzw. Kostenfaktoren geändert haben. Denkbar ist es ebenfalls, dass das Kommunikationsnetzwerk die aktualisierten Werte in etwa zeitgleichen Abständen an den Handcomputer übermittelt.

Weitere Maßnahmen, Vorteile, Merkmale und Effekte der Erfindung ergeben sich aus den Unteransprüchen, der nachfolgenden Beschreibung sowie den Zeichnungen. In den Zeichnungen ist die Erfindung in einem Ausführungsbeispiel schematisch dargestellt. Es zeigen:
- Fig. 1: in schematischer Darstellung einen Handcomputer und ein Kommunikationsnetzwerk, und
- Fig. 2: in schematischer Ansicht das Kommunikationsnetzwerk in welchem das erfindungsgemäße Verfahren abläuft.

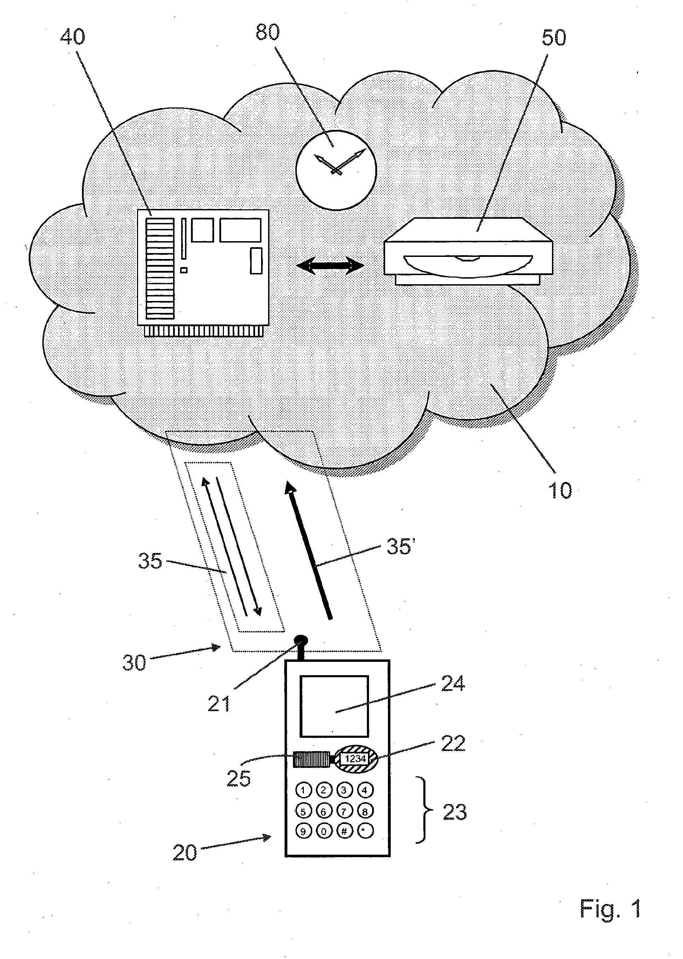

In Figur 1 ist ein Handcomputer 20 dargestellt, der ein als Tastatur ausgestaltetes Eingabemittel 23 aufweist. Mittels dieses Eingabemittels 23 kann der Benutzer Informationen in den Handcomputer 20 eingeben, wobei die Informationen vorteilhafterweise auf einem Ausgabemittel 24 dargestellt werden. Bei dem Ausgabemittel 24 kann es sich um einen Flachbildschirm handeln, der nach einer Flüssigkristall- oder Plasmatechnik arbeitet. In dem Handcomputer 20 ist ein Authentifizierungselement 25 integriert, dass einen Prozessor und einen Speicher aufweist. In dem Speicher ist ein Informationssatz 22 gespeichert. Dieser Informationssatz 22 ermöglicht es die Identität des Handcomputers 20 wie auch jene seines Benutzers eindeutig gegenüber einem Kommunikationsnetzwerk 10 nachzuweisen. Erfindungsgemäß kann der Informationssatz 22 eine IMEI (gerätespezifische, elektronische Identifizierungsnummer), eine IMSI (internationale Mobilfunkteilnehmerkennung) und/oder eine PIN (persönliche Identifikationsnummer) beinhalten.

Damit der Handcomputer 20 mit dem Kommunikationsnetzwerk 10 kommunizieren kann, weist ersterer eine Kommunikationseinrichtung 21 auf. Bei der Kommunikationseinrichtung 21 handelt es sich um eine in konstruktiver Baueinheit ausgeführte Kombination aus Sender und Empfänger. Je nachdem, welches Übertragungsmedium eingesetzt wird, handelt es sich bei den von der Kommunikationseinrichtung 21 empfangenen und/oder gesendeten Signalen um elektrische Pulse, Licht oder elektromagnetische Wellen. Mittels dieser Kommunikationseinrichtung 21 kann der Handcomputer 20 eine Kommunikation 30 mit dem Kommunikationsnetzwerk 10 aufbauen. Über diese Kommunikation 30 ist ein einseitiger oder wechselseitiger Austausch von Sprache, Text, Grafiken oder Daten möglich. Innerhalb des gezeigten Kommunikationsnetzwerkes 10 sind zwei Arten 35,35' der Kommunikation 30 ausführbar. Bei diesen Arten 35,35' der Kommunikation 30 kann es sich beispielsweise im Fall der bidirektionalen Art 35 um eine Telekommunikation und im Fall der monodirektionalen Art 35' um eine SMS handeln. Eine im Kommunikationsnetzwerk 10 integrierte Rechnereinheit 40 überwacht elektronisch die Kommunikation 30. Handelt es sich bei dem Kommunikationsnetzwerk 10 um ein Mobilfunknetz hat es sich als vorteilhaft erwiesen, wenn die Rechnereinheit 40 dezentral aufgebaut ist und insbesondere jede Feststationssteuerung (BSC, Base Station Controller) Teile der Rechnereinheit 40 aufweist. Diese Anordnung verringert den nicht zur reinen Kommunikation 30 gehörenden Informationsstrom innerhalb des Kommunikationsnetzwerkes 10. Ein mittelbares oder unmittelbares Teil der Rechnereinheit 40 ist weiterhin eine Datenbank 50. In diese Datenbank 50 hinterlegt die Rechnereinheit 40 elektronisch einen Umfang 34 und die Art 35,35' jeder innerhalb eines Zeitrahmens 80 geführten Kommunikation 30.

Beim Aufbau der Kommunikation 30 übersendet der Handcomputer 20 den Informationssatz 22. Dieser Informationssatz 22 dient unter anderem dazu die Art 35,35' der Kommunikation 30 zu ermitteln. Dadurch ist sichergestellt, dass innerhalb des Kommunikationsnetzwerkes 10 die korrekte Hardware angesprochen wird. Zum anderen basiert die Kommunikation 30 für unterschiedliche Arten 35,35' auf häufig stark differierenden Protokollen. Um Fehler beim Aufbau der Kommunikation 30 zu verhindern wertet das Kommunikationsnetzwerk 10 den Informationssatz 22 aus und stellt sich auf den Empfang bzw. das Senden entsprechend formatierter Daten ein.

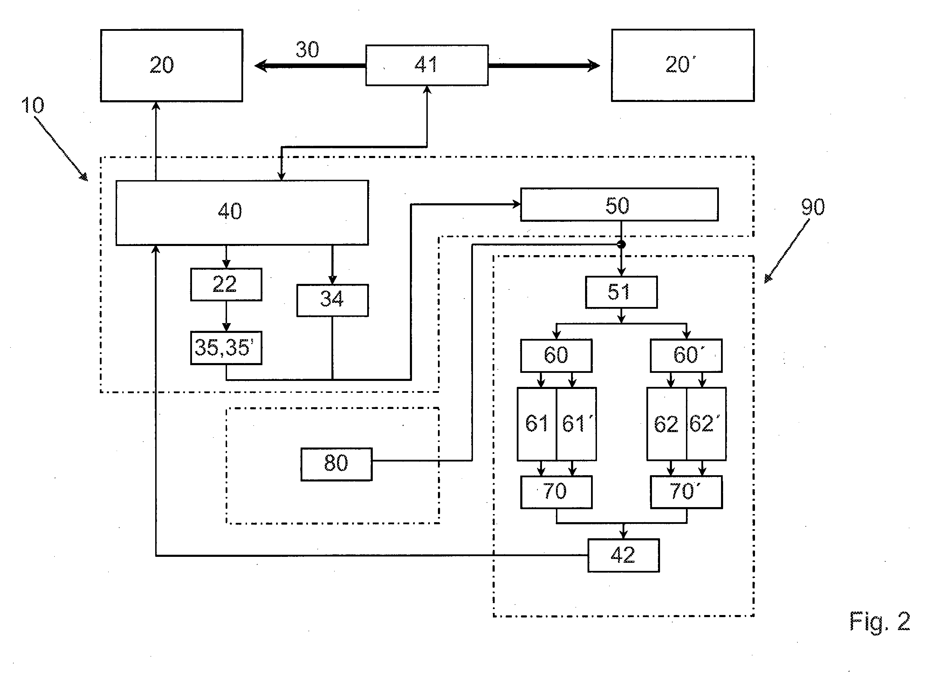

In der Datenbank 50 sind weiterhin mindestens zwei Kostengruppen 60,60' gespeichert. Dabei umfasst jede Kostengruppe 60,60' eine Anzahl individueller Kostenfaktoren 61,61',62,62' für jede Art 35,35' der Kommunikation 30. Wie schon oben dargelegt, ist jede Kostengruppe 60,60' in sich abgeschlossen und weist für jede mögliche Art 35,35' der Kommunikation 30 einen spezifischen Kostenfaktor 61,61',62,62' auf. Kommuniziert ein Handcomputer 20 mit dem Kommunikationsnetzwerk 10 wird ein dafür anfallender Kostensatz 70,70' auf der Grundlage des für dieser Art 35,35' festgelegten Kostenfaktors 61,61',62,62' berechnet. Häufig fließt dabei die Dauer der Kommunikation 30 mit in die Rechnung ein. Andere Dienste, wie etwa SMS weisen einen stückzahlabhängigen Kostenfaktor 61,61',62,62' auf. Aus der Summe aller so berechneten Teilkostensätze ergibt sich nach Ablauf eines Zeitrahmens 80 ein Kostensatz 70,70'. Beispielsweise kann der Zeitrahmen 80 eine Zeitspanne von einer Woche umfassen. In diesem Fall würden sämtliche Kommunikationen 30 die in dieser Woche getätigt würden zu einem Kostensatz 70,70' verrechnet. Erfindungsgemäß ist es nun vorgesehen, dass nicht nur ein Kostensatz 70,70' für nur eine Kostengruppe 60,60' berechnet wird, sondern zumindest zwei Kostensätze 70,70' für jede der wenigstens zwei Kostengruppen 60,60', was auch Figur 2 verdeutlicht.

Zur Verdeutlichung der Verfahrensschritte 90 des Verfahrens sind in Figur 2 das Kommunikationsnetzwerk 10 und die Rechnereinheit 40 dargestellt. Die Recheneinheit 40 überwacht 41 elektronisch die Kommunikation 30 zwischen zwei Handcomputern 20,20'. Bei der Überwachung wird von der Rechnereinheit 40 sowohl ein Umfang 34 der Kommunikation 30 als auch der Informationssatz 22 ermittelt. Aus dem Informationssatz 22 lässt sich die Art 35,35' der Kommunikation 30 bestimmen. Nach Ablauf des Zeitrahmens 80 beginnt das erfindungsgemäße Verfahren. Dabei werden aus den vorgenannten Informationen 34,35,35' zwei Kostensätze 70,70' berechnet. Als Basis für diese Berechnung 51 dienen die zwei Kostengruppen 60,60', die jeweils individuelle Kostenfaktoren 61,61',62,62' für jede Art 35,35' der Kommunikation 30 aufweisen. Aus dem Umfang 34, der Art 35,35' sowie den Kostenfaktoren 61,61',62,62' wird für jede Kostengruppe 60,60' ein Kostensatz 70,70' berechnet. Im Anschluss ermittelt die Rechnereinheit 40 den günstigeren Kostensatz 70,70' der beiden zur Verfügung stehenden Kostensätze 70,70' und weist diesen günstigeren Kostensatz 70,70' dem Handcomputer 20,20' zu 42.

Dem Handcomputer 20,20' wird also erfindungsgemäß immer jener Kostensatz 70,70' zugeordnet, der günstiger ist. Durch das erfindungsgemäße Verfahren wird folglich sichergestellt, dass ein Konsument immer in den Genuss der für ihn jeweils optimalen Kostengruppe 60,60' kommt. Ändert sich sein Kommunikationsverhalten mit der Zeit oder auch nur kurzfristig adaptiert sich das Kommunikationsnetzwerk 10 dank des geschilderten Verfahrens und weist dem Benutzer den jeweils günstigeren Kostensatz 70,70' zu. Dabei umfasst der Begriff günstigerer Kostensatz 70,70' auch den wirtschaftlich niedrigsten Kostensatz 70,70'. Es kann aber auch möglich sein, dass äußere Einflüsse wie etwa Bonuszahlungen oder Vergütungen anderer Art, wie etwa Bonusmeilen, zu einer davon abweichenden Berechnung des jeweils günstigeren Kostensatzes 70,70' führen. Um diese Berechnung zu ermöglichen übersendet der Handcomputer 20,20' einen Authentifizierungssatz an das Kommunikationsnetzwerk 10. Entsprechend können in der Datenbank 50 benutzerspezifische Einstellungen hinterlegt werden, welche die Berechnung des jeweils günstigeren Kostensatzes 70,70' beeinflussen.

### Bezugszeichenliste

- 10: Kommunikationsnetzwerk

- 20,20': Handcomputer
- 21: Kommunikationseinrichtung
- 22: Informationssatz
- 23: Eingabemittel
- 24: Ausgabemittel
- 25: Authentifizierungselement

- 30: Kommunikation
- 34: Umfang der Kommunikation 30
- 35,35': Art der Kommunikation 30

- 40: Rechnereinheit
- 41: Überwachung der Kommunikation 30
- 42: Zuordnung des Kostensatzes 70,70'

- 50: Datenbank
- 51: Bearbeitung der Informationen 34,35,35'

- 60,60': Kostengruppe
- 61,61': Kostenfaktoren der Kostengruppe 60
- 62,62': Kostenfaktoren der Kostengruppe 60'

- 70,70': Kostensatz

- 80: Zeitrahmen

- 90: Verfahrensschritte

## Patentansprüche

1. Verfahren zur elektronischen Optimierung eines Kostensatzes (70,70'), in einem Kommunikationsnetzwerk (10), wobei
über eine Kommunikationseinrichtung (21) eines Handcomputers (20,20') eine Kommunikation (30) mit dem Kommunikationsnetzwerk (10) aufgebaut wird,
mit dem Kommunikationsnetzwerk (10) mindestens zwei Arten (35,35') der Kommunikation (30) ausführbar sind,
**dadurch gekennzeichnet, dass**
durch eine Rechnereinheit (40) die Kommunikation (30) mit dem Kommunikationsnetzwerk (10) elektronisch überwacht (41) wird,
wobei die Rechnereinheit (40) und eine Datenbank (50) in dem Handcomputer (20,20') integriert sind,
die Rechnereinheit (40) mittels eines beim Aufbau der Kommunikation (30) übersandten Informationssatzes (22) die Art (35,35') der Kommunikation (30) ermittelt,
die Rechnereinheit (40) elektronisch einen Umfang (34) und die Art (35,35') jeder innerhalb eines Zeitrahmens (80) geführten Kommunikation (30) in der Datenbank (50) hinterlegt,
in der Datenbank (50) mindestens zwei Kostengruppen (60,60') gespeichert sind,
jede Kostengruppe (60,60') individuelle Kostenfaktoren (61,61',62,62') für jede Art (35,35') der Kommunikation (30) aufweist,
nach Ablauf des Zeitrahmens (80) von der Rechnereinheit (40) für jede Kostengruppe (60,60') ein Kostensatz (70,70') ermittelt wird,
die Kostensätze (70,70') aus dem Umfang (34), der Art (35,35') der Kommunikation (30) und den Kostenfaktoren (61,61',62, 62') berechnet werden,
und die Rechnereinheit (40) anschließend elektronisch den niedrigeren Kostensatz (70,70') auswählt und
der Handcomputer (20,20') dem Kommunikationsnetzwerk (10) mitteilt, welcher Kostensatz dem Handcomputer (20,20') zugeordnet werden soll,
wobei insbesondere die Kostengruppen (60,60') und eine oder mehrere Kostenfaktoren (61,61',62, 62') bei der Kommunikation (30) mit dem Kommunikationsnetzwerk (10) aktualisiert werden.

2. Verfahren nach Anspruch 1,
**dadurch gekennzeichnet,**
**dass** von der Rechnereinheit (40) zwischen den Arten (35,35') SMS (Short Message Service), MMS (Multimedia Messaging Service), EMS (Enhanced Message Service), UM (Unified Messaging), LBS (Location Based Services), Funk oder Telekommunikation über ein Festnetz oder ein Mobilfunknetz unterschieden wird, wobei insbesondere das Mobilfunknetz nach einem 3G, UMTS (Universal Mobile Telecommunications System) und/oder GSM (Global System for Mobile Communications) Standard betrieben wird.

3. Verfahren nach Anspruch 1 ,
**dadurch gekennzeichnet,**
**dass** von der Rechnereinheit (40) ein Standort des Handcomputers (20,20') innerhalb des Kommunikationsnetzwerkes (10) bestimmt wird, wobei insbesondere der Standort des Handcomputers (20,20') die Art (35,35') der Kommunikation (30) beeinflusst, wobei bevorzugt von der Rechnereinheit (40) die Art (35,35') der Kommunikation (30) in Abhängigkeit von dem Standort des Handcomputers (20,20') geändert wird.

4. Verfahren nach Anspruch 3,
**dadurch gekennzeichnet,**
**dass** eine Änderung in der Art (35,35') der Kommunikation (30) auf einem Ausgabemittel (24) des Handcomputers (20,20') angezeigt wird.

5. Verfahren nach einem der vorhergehenden Ansprüche,
**dadurch gekennzeichnet,**
**dass** die Rechnereinheit (40) den jeweils günstigeren Kostensatz (70,70') mehrerer Zeitrahmen (80) in der Datenbank (50) speichert, wobei insbesondere die Rechnereinheit (40) den jeweils günstigeren Kostensatz (70,70') mehrerer aufeinander folgender Zeitrahmen (80) in der Datenbank (50) speichert und die Rechnereinheit (40) aus den gespeicherten Kostensätzen (70,70') einen Mittelwert und eine Standardabweichung berechnet.

6. Verfahren nach einem der vorhergehenden Ansprüche,
**dadurch gekennzeichnet,**
**dass** von der Rechnereinheit (40) die Kostenfaktoren (61,61',62,62') im Anschluss an eine Auswertung der gespeicherten Kostensätze (70,70') verändert werden, wobei die Auswertung einen Vergleich mit den Mittelwerten und/oder den Standardabweichungen anderer Handcomputer (20,20') beinhaltet.

7. Verfahren nach einem der vorhergehenden Ansprüche,
**dadurch gekennzeichnet,**
**dass** bei der Kommunikation (30) von dem Handcomputer (20,20') ein Authentifizierungssatz übermittelt wird, wobei von der Rechnereinheit (40) die Kostenfaktoren (61,61',62,62') in Abhängigkeit vom Authentifizierungssatz verändert werden.

## Claims

1. A method for electronically optimising a cost rate (70, 70') in a communication network (10), wherein
a communication (30) is established with the communication network (10) via a communication apparatus (21) of a hand-held computer (20, 20'),
at least two types (35, 35') of communication (30) can be executed using the communication network (10),
**characterised in that**
the communication (30) with the communication network (10) is electronically monitored (41) by means of a computer unit (40),
wherein the computer unit (40) and a database (50) are integrated in the hand-held computer (20, 20'),
the computer unit (40) determines the type (35, 35') of communication (30) by means of an information reword (22) transmitted when establishing the communication (30),
the computer unit (40) electronically stores a scope (34) and the type (35, 35') of each communication (30) managed within a time period (80) in the database (50),
at least two cost groups (60, 60') are stored in the database (50),
each cost group (60, 60') has individual cost factors (61, 61', 62, 62') for each type (35, 35') of communication (30),
at the end of the time period (80) a cost rate (70, 70') is determined for each cost group (60, 60') by the computer unit (40),
the cost rates (70, 70') are calculated from the scope (34), the type (35, 35') of communication (30) and the cost factors (61, 61', 62, 62'),
and the computer unit (40) subsequently electronically selects the lower cost rate (70, 70') and the hand-held computer (20, 20') notifies the communication network (10) which cost rate should be assigned to the hand-held computer (20, 20'),
wherein the cost groups (60, 60') and one or a plurality of cost factors (61, 61', 62, 62') in particular are updated during the communication (30) with the communication network (10).

2. The method according to claim 1,
**characterised in that**
the computer unit (40) differentiates between the types (35, 35') SMS (Short Message Service), MMS (Multimedia Messaging Service), EMS (Enhanced Message Service), UM (Unified Messaging), LBS (Location Based Services), radio or telecommunication via a fixed-line network or a Mobile communications network, wherein the mobile communications network in particular is operated in accordance with a 3G, UMTS (Universal Mobile Telecommunications System) and/or GSM (Global System for Mobile Communications) standard.

3. The method according to claim 1,
**characterised in that**
a location of the hand-held computer (20, 20') within the communication network (10) is determined by the computer unit (40), wherein the location of the hand-held computer (20, 20') in particular determines the type (35, 35') of communication (30), wherein the type (35, 35') of communication (30) is preferably determined by the computer unit (40) depending on the location of the hand-held computer (20, 20').

4. The method according to claim 3,
**characterised in that**
a change in the type (35, 35') of communication (30) is displayed on an output means (24) of the hand-held computer (20, 20')

5. The method according to one of the preceding claims,
**characterised in that**
the computer unit (40) stores the respectively cheaper cost rate (70, 70') of a plurality of time periods (80) in the database (50), wherein the computer unit (40) in particular stores the respectively cheaper cost rate (70, 70') of a plurality of successive time periods (80) in the database (50) and the computer unit (40) calculates an average value and a standard deviation from the stored cost rates (70, 70').

6. The method according to one of the preceding claims,
**characterised in that**
the cost factors (61, 61', 62, 62') are changed by the computer unit (40) following an evaluation of the stored cost rates (70, 70'), wherein the evaluation includes a comparison with the average values and/or the standard deviations of other hand-held computers (20, 20').

7. The method according to one of the preceding claims,
**characterised in that**
during the communication (30), an authentication record is transmitted by the hand-held computer (20, 20'), wherein the cost factors (61, 61', 62, 62') are changed by the computer unit (40) depending on the authentication record.

## Revendications

1. Procédé pour l'optimisation électronique d'un taux de frais (70, 70') dans un réseau de communication (10), dans lequel
une communication (30) est établie avec le réseau de communication (10) via un dispositif de communication (21) d'un ordinateur de poche (20, 20'),
au moins deux types (35, 35') de communications (30) pouvant être réalisés avec le réseau de communication (10),
**caractérisé en ce que**
grâce à une unité de calcul (40), la communication (30) avec le réseau de communication (10) est surveillée électroniquement (41),
l'unité de calcul (40) et une base de données (50) étant intégrées dans l'ordinateur de poche (20, 20'),
l'unité de calcul (40) déterminant le type (35, 35') de la communication (30) à l'aide d'un ensemble d'informations (22) transmis lors de l'établissement de la communication (30),
l'unité de calcul (40) enregistrant électroniquement dans la base de données (50) une étendue (34) et le type (35, 35') de chaque communication (30) réalisée au cours d'une période (80),
au moins deux groupes de frais (60, 60') étant enregistrés dans la base de données (50),
chaque groupe de frais (60, 60') présentant des
facteurs de frais (61, 61', 62, 62') individuels pour chaque type (35, 35') de communication (30),
une fois la période (80) écoulée, l'unité de calcul (40) déterminant un taux de frais (70, 70') pour chaque groupe de frais (60, 60'),
les taux de frais (70, 70') étant calculés à partir de l'étendue (34), du type (35, 35') de la communication (30) et des facteurs de frais 61, 61', 62, 62'),
et l'unité de calcul (40) sélectionnant ensuite électroniquement le taux de frais (70, 70') le plus bas, l'ordinateur de poche (20, 20') signalant au réseau de communication (10) quel taux de frais doit être associé à l'ordinateur de poche (20, 20'),
dans lequel, en particulier les groupes de frais (60, 60') et un ou plusieurs facteurs de frais (61, 61', 62, 62') sont actualisés lors de la communication (30) avec le réseau de communication (10).

2. Procécé selon la revendication 1,
**caractérisé en ce que**
l'unité de calcul (40) effectue une distinction entre les types (35, 35') SMS (Short Message Service), MMS (Multimédia Messaging Service), EMS (Enhanced Message Service), UM (Unified Messaging), LBS (Location Based Services), radio ou télécommunication via un réseau fixe ou un réseau de radiocommunication mobile, le réseau de radiocommunication mobile étant en particulier exploité selon un standard 3G, UMTS (Universal Mobile Telecommunications System) et/ou GSM (Global System for Mobile Communications).

3. Procédé selon la revendication 1,
**caractérisé en ce que**
l'unité de calcul (40) détermine un emplacement de l'ordinateur de poche (20, 20') au sein du réseau de communication (10), moyennant quoi en particulier l'emplacement de l'ordinateur de proche (20, 20') influence le type (35, 35') de la communication (30), l'unité de calcul (40) modifiant de préférence le type (35, 35') de la communication (30) en fonction de l'emplacement de l'ordinateur de poche (20, 20').

4. Procécé selon a revendication 3,
**caractérisé en ce que**
une modification du type (35, 35') de la communication (30) est indiquée sur un moyen de sortie (24) de l'ordinateur de poche (20, 20').

5. Procécé selon l'une des revendications précédentes,
**caractérisé en ce que**
l'unité de calcul (40) enregistre dans la base de données (50) le taux de frais (70, 70') respectivement le plus avantageux de plusieurs périodes (80), l'unité de calcul (40) enregistrant en particulier dans la base de données (50) le taux de frais (70, 70') respectivement le plus avantageux de plusieurs périodes (80) successives et l'unité de calcul (40) calculant, à partir des taux de frais (70, 70') enregistrés, une valeur moyenne et un écart type.

6. Procécé selon l'une des revendications précédentes,
**caractérisé en ce que**
l'unité de calcul (40) modifie les facteurs de frais (61, 61', 62, 62') à la suite d'une évaluation des taux de frais (70, 70') enregistrés, l'évaluation comprenant une comparaison avec les valeurs moyennes et/ou les écarts type d'autres ordinateurs de poche (20, 20').

7. Procédé selon l'une des revendications précédentes,
**caractérisé en ce que**
lors de la communication (30), l'ordinateur de poche (20, 20') communique une phrase d'authentification, l'unité de calcul (40) modifiant les facteurs de frais (61, 61', 62, 62') en fonction de la phrase d'authentification.
